# EUROPÄISCHE PATENTSCHRIFT

(11) **EP 2 233 956 B1**
(45) Veröffentlichungstag und Bekanntmachung des Hinweises auf die Patenterteilung: **22.10.2014**
(21) Anmeldenummer: 10156485.4
(22) Anmeldetag: 15.03.2010
(51) Int. Cl.: G02B 6/44, H02B 1/50, H02G 3/22

(54) **Glasfaser-Verteilerschrank**
Glass fibre distribution cabinet
Armoire de répartition en fibres de verre

(30) Priorität: 26.03.2009 DE 102009014994
(43) Veröffentlichungstag der Anmeldung: 29.09.2010
(73) Patentinhaber: Berthold Sichert GmbH, 12277 Berlin (DE)
(72) Erfinder: Irmer, Günter, 13055, Berlin (DE)
(74) Vertreter: Alber, Norbert

(56) Entgegenhaltungen:
- EP-A1- 1 811 625
- DE-A1- 2 720 936
- DE-A1- 4 236 838
- DE-A1- 10 105 993
- DE-C1- 4 232 787
- FR-A1- 2 776 850
- US-A1- 2008 080 828

## Beschreibung

### I. Anwendungsgebiet

Die Erfindung betrifft einen Verteilerschrank für Glasfaserstränge, die zur Breitband-Datenübertragung benutzt werden, also sowohl für Internet- als auch für TV- und Telefonanschlüsse, und der in der Regel im Freien aufgestellt ist und die - insbesondere passiven - optischen Verteileranlagen für ein bestimmtes räumliches Gebiet, beispielsweise einen Straßenzug, aufnimmt.

### II. Technischer Hintergrund

Analoge Verteilerschränke stehen für den Anschluss von einzelnen Nutzern über Kupferkabel heute bereits in großer Zahl auf öffentlichem Grund. Nunmehr sollen die Nutzer mit einer Glasfaserleitung bis zum Nutzer versorgt werden.

Ebenso wie die entsprechenden Kupfer-Verteilerschränke müssen auch die Glasfaser-Verteilerschränke - neben einer ausreichenden baulichen Stabilität und IP-Sicherheit, also Dichtigkeit gegen Regen- und Spritzwasser, sowie einer Widerstandsfähigkeit gegen z. B. Vandalismus etc - weitere Forderungen erfüllen.

Beispielsweise dürfen im Fall aktiver Komponenten keine zu starken elektromagnetischen Strahlungen in die Umgebung abgegeben werden. Der Anfall an Kondenswasser im Inneren des Verteilerschrankes muss vermieden werden.

Im Unterschied zu Kupferkabeln sind Glasfaserkabel empfindlicher, mechanisch weniger stabil und leichter zu beschädigen und insbesondere im Falle von Vandalismus leichter abzutrennen.

Vor allem wegen der Umhüllung der Glasfaserstränge mit Kunststoffrohren ist auch eine obere Temperaturgrenze einzuhalten und insbesondere eine Beschädigung im Falle von auftretendem Feuer zu berücksichtigen, welches durch einen Autounfall ebenso entstehen kann wie durch einen Brand in einem nebenstehenden Gebäude oder Vandalismus.

Des Weiteren muss bedacht werden, dass im Gegensatz zu Kupferkabeln der Aufwand des Anschließens, also insbesondere des Spleißens und Verschweißens von einzelnen Glasfasern, wesentlich höher ist als der Aufwand des Verklemmens eines Kupferkabels an einer Klemmleiste.

Dies bedeutet, dass im Falle einer so starken Beschädigung des Verteilerschrankes, z. B. durch ein dagegen fahrendes Kraftfahrzeug, einzelne oder mehrere Glasfaserstränge abreißen und der Reparaturaufwand um ein Vielfaches höher ist, als die Reparatur bei einer Kupferverkabelung.

In diesem Zusammenhang ist aus der DE 10105993 A1 ein Glasfaserverteilerschrank bekannt, der
- ein Außengehäuse und ein darin untergebrachtes Innengehäuse aufweist,
- mit einem darunter angeordneten Sockeloberteil und
- einem im Erdboden unterzubringenden darunter befindlichen Sockelunterteil,
- sowie Sollbruchelementen zwischen Sockeloberteil und Sockelunterteil und
- Strangzuführungen für den Hauptstrang als auch die Mikrostränge der Glasfaserkabel von unten durch das Sockelunterteil in das Sockeloberteil in das Innengehäuse.

### III. Darstellung der Erfindung

### a) Technische Aufgabe

Es ist daher die Aufgabe gemäß der Erfindung, einen Glasfaser-Verteilerschrank zu schaffen, der gegen Unfall- oder vandalismusbedingte Beschädigungen sehr stabil ist, möglichst einbruchssicher ist und trotz geringer Gestehungskosten im Beschädigungsfall das Risiko des Abreißens von Glasfasersträngen möglichst gering ist.

### b) Lösung der Aufgabe

Diese Aufgabe wird durch die Merkmale des Anspruches 1 gelöst. Vorteilhafte Ausführungsformen ergeben sich aus den Unteransprüchen.

Durch den zweischaligen Aufbau des Gehäuses wird zunächst erreicht, dass im Innenraum des Innengehäuses die Temperatur auch bei hohen Außentemperaturen niedrig bleibt und kein Kondenswasser anfällt.

Indem das Innengehäuse bis auf die Zuführungen für die Glasfaserstränge geschlossen ist, kann weder mit dünnen Werkzeugen in den Innenraum des Innengehäuses vorgedrungen werden, noch können Wasser und Schmutz in das Innengehäuse vordringen.

Durch die Unterteilung des Innenraums im Innengehäuse in zwei Teile können in dem einen Teil, dem Verbindungsraum, die Kassetten, in denen die Verbindungsstellen zwischen eingehender und ausgehender Glasfaser zusammen mit entsprechenden Reserveschleifen etc. angeordnet sind, separat und geschützt von dem anderen Teil, dem Einführraum, untergebracht werden, in den die Glasfaserstränge von unten, also vom Sockel her, münden und in den trotz der Abdichtung der Strangeintritte ggf. doch noch Verunreinigungen oder Feuchtigkeit eindringen könnten. Beide Teilräume besitzen die gleiche Dichtigkeits- und als auch Sicherheitsklasse.

Sowohl das Außengehäuse, vor allem aber auch das Innengehäuse, besitzen zwar eine Tür zum Öffnen, die sich meist über die gesamte Frontfläche erstreckt und ein- oder zweiflüglig sein kann, jedoch sind diese Türen separat abschließbar. Beim Innengehäuse dreht vorzugsweise jede Tür einen der beiden Teilräume ab und ist separat absperrbar.

Dies erhöht vor allem die Einbruchsicherheit und damit die Sicherheit gegen Vandalismus, denn ein Eindringling müsste zuerst das Außengehäuse trotz der Schließung öffnen, und anschließend auch noch das Innengehäuse, was in der Summe einen so hohen Zeitaufwand bedeutet, dass dieser in der Regel von diesem Vorhaben ablassen wird, da die Gefahr, zwischenzeitlich bemerkt zu werden, zu groß ist. Auch die Klappe des Sockeloberteils muss entsprechend einbruchsicher ausgestaltet sein.

Während das Außengehäuse üblicherweise aus Kunststoff besteht und vor allem dem Schutz gegen Witterung dient, ist das Innengehäuse vorzugsweise aus Metall, etwa Stahlblech, gefertigt und deutlich stabiler.

Ein wesentlicher Punkt ist jedoch die Absicherung des Glasfaserverteilerschrankes gegen ein Abreißen der Glasfaserstränge, falls der Verteilerschrank von einem Fahrzeug umgefahren wird.

Für diesen Fall sind zwischen dem Sockeloberteil und dem im Erdreich eingegrabenen Sockelunterteil Sollbruchelemente angeordnet, die sich somit etwa auf Erdgleiche befinden und abreißen, falls gegen den oberen Teil des Verteilerschrankes ein zu starker Aufprall erfolgt.

In diesem Fall kippt also der oberhalb des Sockelunterteils befindliche Teil des Verteilerschrankes um .Damit dabei die vom Sockelunterteil aus in das Sockeloberteil und den Rest des Verteilerschrankes geführten Glasfaserstränge nicht abreißen, müssen diese Glasfaserstränge zum einen eine ausreichende Pufferlänge zwischen dem Austritt aus dem Erdboden und der Fixierung in den Kassetten besitzen, um die Zusatzlänge zwischen dem Sockelunterteil und einem umgekippten daneben liegenden Sockeloberteil überbrücken zu können.

Dies allein ist jedoch nicht ausreichend, um ein Abreißen der Stränge zu verhindern. Vielmehr können Glasfaserstränge auch relativ leicht durch eine Querbelastung abreißen, weshalb jeder Glasfaserstrang einzeln oder zusammengefasst zu dickeren Strängen, insbesondere einem einzigen Strang, in einem flexiblen, vorzugsweise einzigen Schutzrohr oder Schutzschlauch, vorzugsweise aus Metall, aufgenommen ist, und zwar von dem Austritt aus dem Erdboden im Sockelunterteil bis zum Innengehäuse.

Dabei ist dieses Schutzrohr am Innengehäuse, mindestens an der Bodenplatte des Innengehäuses, so stabil befestigt, dass diese Verbindung auch beim Umkippen des Verteilerschrankes nicht abreißt. Hierdurch wird eine erhöhte Sicherung gegen Abscheren von Glasfasersträngen erzielt.

Um diese Schutzwirkung zu verbessern, wird das Schutzrohr vorzugsweise zusätzlich am Sockeloberteil, also in dessen Inneren, befestigt, welches bei einem solchen Aufprall mit umkippt, so dass eine doppelte Befestigung des Schutzrohres im umgekippten Teil vorliegt, und das Abreißen dieser Befestigung somit sehr unwahrscheinlich ist.

Im Sockelunterteil dagegen ist in aller Regel keine Befestigung des Schutzrohres vorgesehen, um hier ein Nachrutschen durch den länger werdenden Weg zum Verteilerkasten zu ermöglichen.

Die Zusammenfassung aller Glasfaserstränge in einem einzigen Schutzrohr hat auch den Vorteil, dass dieses Schutzrohr dadurch einen so großen Außendurchmesser erhält, dass es durch übliche Bolzenschneider nicht mehr durchgetrennt werden kann.

Somit schützt das Schutzrohr auch im umgekippten Zustand des Verteilerkastens auf dem dann frei zugänglichen Stück vom Sockelunterteil zum Sockeloberteil die Glasfaserstränge auch gegen Vandalismus, und dient gleichzeitig als Zugentlastung für die darin geführten Glasfaserstränge.

Die Stabilität, aber auch die Reparaturfreundlichkeit des Gehäuses wird weiter dadurch verbessert, dass zwischen Innengehäuse und Außengehäuse ein Traggestell vorhanden ist, welches auf dem Sockeloberteil befestigt ist, vorzugsweise verschraubt ist.

In diesem Traggestell wird im Inneren das Innengehäuse als ganzes eingesetzt und befestigt. Das Außengehäuse, welches auch ein aus Einzelteilen zusammengesetztes Gehäuse sein kann, wird von außen über das Traggestell gesetzt und mit diesem verschraubt, vorzugsweise über nur von der Innenseite her zugängliche Verschraubungen, sodass diese von Unbefugten nicht gelöst werden können.

Im Fall einer Beschädigung lediglich des Außengehäuses bei einem leichten Aufprall kann das Außengehäuse abgenommen werden, ohne dass Arbeiten am Traggestell, oder gar am Innengehäuse, notwendig sind. Selbst wenn dabei das Traggestell mitbeschädigt wurde, können die beschädigten Einzelteile des Traggestells separat ausgetauscht werden, da das Traggestell ein aus Einzelteilen verschraubter Rahmen ist.

Vorzugsweise bestehen auch das Sockeloberteil und/oder das Sockelunterteil aus mehreren Einzelnteilen, die durch nur von innen zugängliche Verbindungselemente miteinander verbunden sind, aber im Beschädigungsfall dennoch von innen gelöst und die Einzelteile separat ausgetauscht werden können.

Die Anordnung eines Sockeloberteiles zwischen dem im Erdboden eingebrachten Sockelunterteil und dem eigentlichen Verteilerkasten dient mehreren Gründen:
Zum einen dem zuverlässigen Öffnen der Türen des Außen- und Innengehäuses auch bei hoch liegendem Schnee oder anderen am Boden liegenden Verunreinigungen oder Hindernissen.

Zum anderen auch, um Platz für die Durchführung und Unterbringung von geringen Reservelängen der Glasfaserstränge auf den Weg in den Innenraum des Innengehäuses zu bieten, sowie des weiteren der Zugänglichkeit zur Unterseite des Bodens des Innengehäuses, in der die Abdichtung der Glasfaserstränge bzw. deren Hüllen gegenüber den Einführöffnungen im Gehäuse vorgenommen werden müssen.

Dementsprechend muss entweder das gesamte Sockeloberteil oder zumindest das Schutzrohr, mit welchem die Glasfaserstränge durch das Sockeloberteil hindurchgeführt werden, den gleichen Sicherheitsklassen gegen Beschädigung und/oder Dichtigkeit entsprechen wie den darauf aufsitzenden, eigentlichen Verteilerschrank.

Um eine Durchlüftung im Zwischenraum zwischen Außengehäuse und Innengehäuse zu schaffen, sind Lüftungsöffnungen sowohl im oberen als auch im unteren Bereich des Außengehäuses vorhanden, um durch den eintretenden Kamineffekt eine selbsttätige Belüftung des Zwischenraumes und damit Abkühlung zu schaffen. Dies geht in der Wirkung so weit, dass selbst bei einem mittels Brandbeschleunigern in Brand gesetzten Außengehäuse die Temperaturen im Innengehäuse über lange Zeit so niedrig bleiben, dass eine Schädigung der dort vorhandenen Glasfaserstränge nicht eintritt.

Zwischen dem Traggestell und dem Sockeloberteil sind ferner eine oder mehrere großflächige Öffnungen für den Durchtritt der Glasfaserstränge vorhanden.

Eine abgedichtete Einführung der Glasfaserstränge erfolgt jedoch erst im Boden des Innengehäuses, welches an die Durchmesser der Glasfaserstränge angepasste Öffnungen besitzt, in welche die einzelnen Glasfaserstränge - der eine oder die mehreren dicken Hauptstränge ebenso wie die zum Nutzer führenden Mikrostränge - separat über entsprechende Dichtelemente eingeführt werden.

Das Schutzrohr endet vorzugsweise vor diesen Dichtelementen, ist aber dennoch an der Unterseite des Bodens des Innengehäuses befestigt.

Für die bessere Zugänglichkeit sind innerhalb des Innengehäuses der Einführraum und der Verbindungsraum - bei Betrachtung von vorne - nebeneinander angeordnet, hierbei im Verbindungsraum vorzugsweise ein Aufnahmegestell, insbesondere ein so genanntes ETS-Gestell, zum horizontalen Einschieben der Spleiß- und Splitter-Kassetten. Dementsprechend sind auf Höhe jeder Einschubposition in der Trennwand zwischen den beiden Räumen jeweils Durchtrittsöffnungen in der entsprechenden Anzahl und Größe für die in der jeweiligen Kassette zu verbindenden Glasfaserstränge angeordnet.

Zumindest die Mikrostränge, insbesondere auch die Hauptstränge der Glasfasern, sind jeweils in flexiblen Kunststoffrohren als äußere Hülle aufgenommen, die sich bei Ummantelung mit dem Schutzrohr somit innerhalb des Schutzrohres befinden.

Um ein Eindringen von Wasser, Gas sowie Verunreinigungen z. B. Insekten, vom Erdreich in den Einführraum oder gar den Verbindungsraum zu vermeiden, sind dabei alle Durchtrittsmöglichkeiten im Zusammenhang mit den Glasfasersträngen abgedichtet, vorzugsweise separat abgedichtet.

In den Durchtrittsöffnungen des Bodens des Innengehäuses ist der Außenumfang des Glasfaserstranges, also des Kunststoffrohres als äußerer Hülle, gegenüber dem Inngehäuse mittels eines speziellen Abdichtelementes abgedichtet.

Zusätzlich ist natürlich der eigentliche Glasfaserstrang beim Austritt aus dem Kunststoffohr gegenüber diesem abgedichtet.

Falls in dem Glasfaserhauptstrang mehrere Mikrostränge zusammengefasst sind, die jeweils über ein eigenes Kunststoffrohr als Hülle verfügen, ist selbstverständlich auch eine Abdichtung zwischen den einzelnen Kunststoffrohren gegenüber der Gesamtummantelung, die durch den Boden des Innengehäuses eingeführt wird, notwendig.

In analoger Weise muss am anderen Ende der Glasfaserstränge eine funktionsgleiche Abdichtung vorhanden sein.

Ebenso erfolgt eine Abdichtung im Sockelunterteil an der Austrittsstelle der einzelnen Glasfaserstränge aus dem Erdrohr, in dem die Stränge lose eingelegt sind.

Bei Montage des Verteilerschrankes werden zunächst vom Verteilerschrank aus zu den einzelnen Nutzern lediglich diese Kunststoffrohre verlegt, welche fertig abgedichtet in dem Boden des Innengehäuses enden.

Nach diesen mechanischen Vorarbeiten wird der eigentliche Anschluss durchgeführt, wofür in das entsprechende Kunststoffrohr zum gewünschten Nutzer hin mittels Luftdruck ein Glasfaserstrang eingeschossen wird bis zum Nutzer und dessen hinteres Ende anschließend mit dem vorderen Ende der entsprechenden Fasern aus dem Hauptstrang verbunden, insbesondere verschweißt, und in einer entsprechenden Spleiß- und Splitter-Kassette abgelegt wird, in die somit sowohl der heranführende als auch das abführende Glasfaserstrang vom Einführraum aus hineinführen.

### c) Ausführungsbeispiele

Ausführungsformen gemäß der Erfindung sind im Folgenden beispielhaft näher beschrieben. Es zeigen:
- Fig. 1:: Den kompletten Verteilerschrank,
- Fig. 2:: nur das Innengehäuse des Verteilerschrankes,
- Fig. 3:: eine anderen Baugröße des Innengehäuses eines Verteiler- schrankes, und
- Fig. 4:: einen umgefahrenen Verteilerschrank.

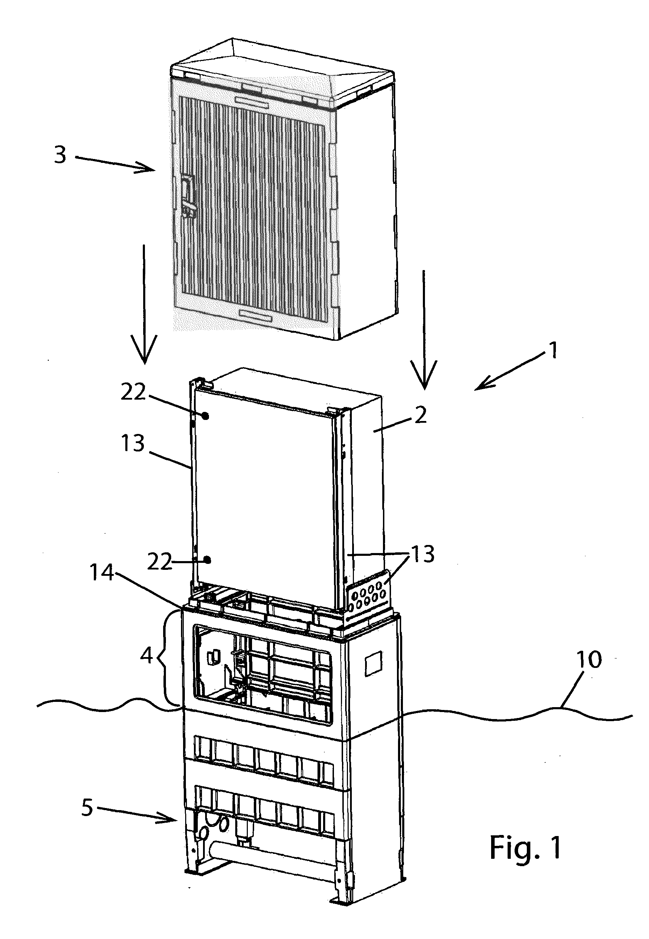

Figur 1 zeigt einen fertig erstellten Verteilerschrank 1 mit nach oben abgezogenem Außengehäuse 3:
In der Reihenfolge von unten nach oben befindet sich zunächst im Erdboden eingegraben das Sockelunterteil 5, welches im Wesentlichen ein in der Aufsicht betrachtet ringförmig umlaufender, oben und unten offener, Kasten ist, der auch an seiner Frontfläche im unteren Bereich eine zusätzliche Ausnehmung aufweisen kann.

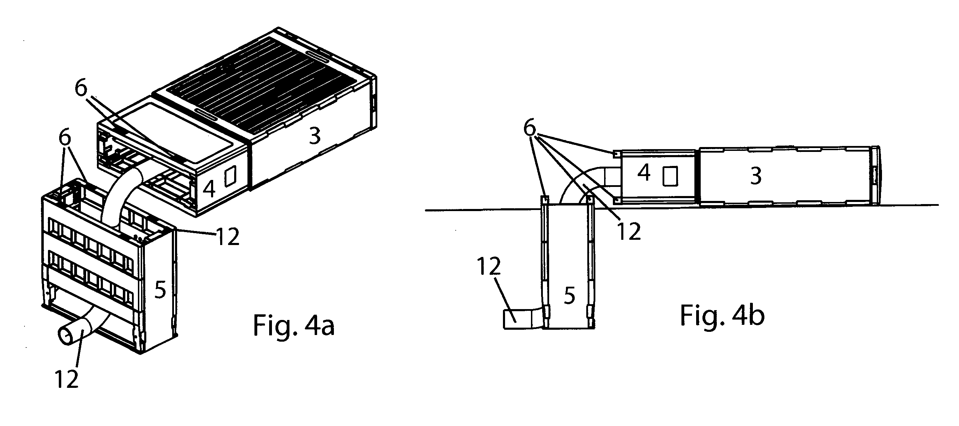

Das Sockeloberteil 4 besitzt in der Aufsicht betrachtet die gleichen Abmessungen wie das Sockelunterteil 5, ist oben und unten offen und wird mit seiner Unterseite auf der Oberseite des Sockelunterteiles 5 mittels der in den Figuren 4 dargestellten Soll-Bruchelemente 6 verbunden, die so dimensioniert sind, dass sie bei einem horizontalen Aufprall gegen den überirdischen Teil des Verteilerschrankes, also den über der Erdgleiche 10 liegenden Sockelteil 4 aber oder des Innen- oder Außengehäuses 2 und 3 abreißen, möglichst bevor an den übrigen Teilen des Verteilerschrankes 1 eine nennenswerte Beschädigung eintritt.

Hierfür sind die Sollbruchelemente 6 ebenso wie Sockeloberteil 4 und Sockelunterteil 5 aus Kunststoff hergestellt, jedoch wesentlich schwächer dimensioniert.

Im Sockeloberteil 4 ist in der Frontfläche eine große Wartungsöffnung vorhanden, die entweder über eine verschließbare, nicht dargestellte, Tür oder einen Deckel verschlossen werden kann und/oder, von einer umlaufenden Sockelkappe, die von oben vor dem Aufsetzen der restlichen Teile des Verteilerschrankes aufgesetzt wird, verschlossen wird, um auch hier hohe Einbruchsicherheit zu gewährleisten.

Auf der Oberseite des Sockeloberteiles 4 wird zunächst die Bodenplatte 14 befestigt, die aufgrund ihrer großen zentralen Öffnung im Wesentlichen ein rechteckig umlaufender Rahmen ist. An der Bodenplatte 14 wird ein nach oben aufragendes Traggestell 13 verschraubt, welches in der dargestellten Version aus zwei Seitenplatten und auf jeder Seite einer seitlich, nahe der vorderen Ecke nach oben ragenden, Strebe besteht.

An diesem Traggestell 13 kann das Innengehäuse 2, welches von hinten oder von vorne in das Traggestell 13 eingeschoben werden kann, verschraubt werden, welches in aller Regel aus Metall besteht, ebenso wie das Traggestell 13 und meist auch die Bodenplatte 14.

Nunmehr kann das - meist aus von außen mit trennbaren Einzelteilen zusammengesetzte - aus Kunststoff bestehende Außengehäuse 3, welches an der Unterseite offen ist, wie eine Kappe von oben über Traggestell 13 und Innengehäuse 2 gestülpt werden und am Traggestell 13 von innen her verschraubt werden.

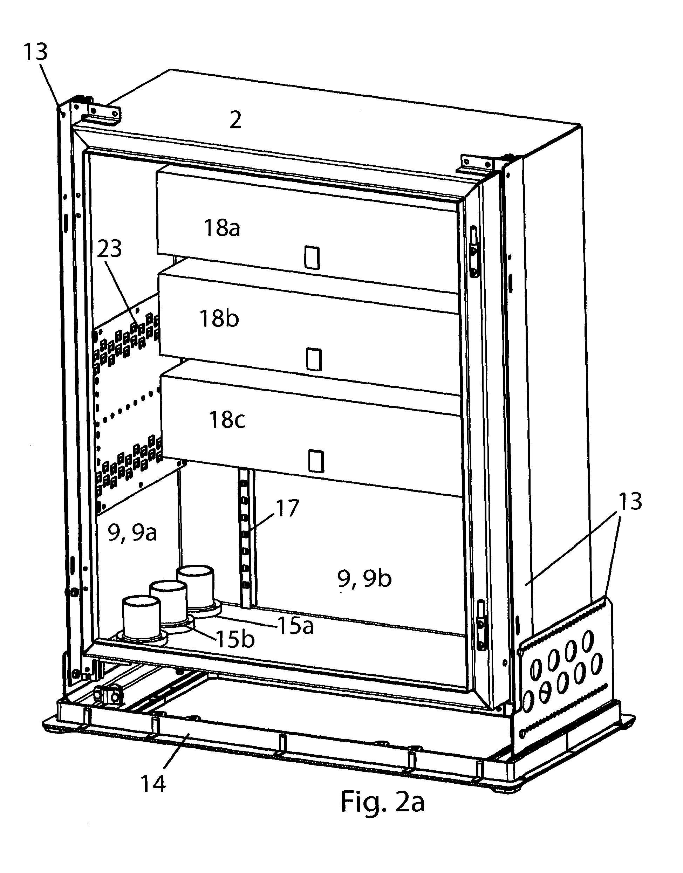

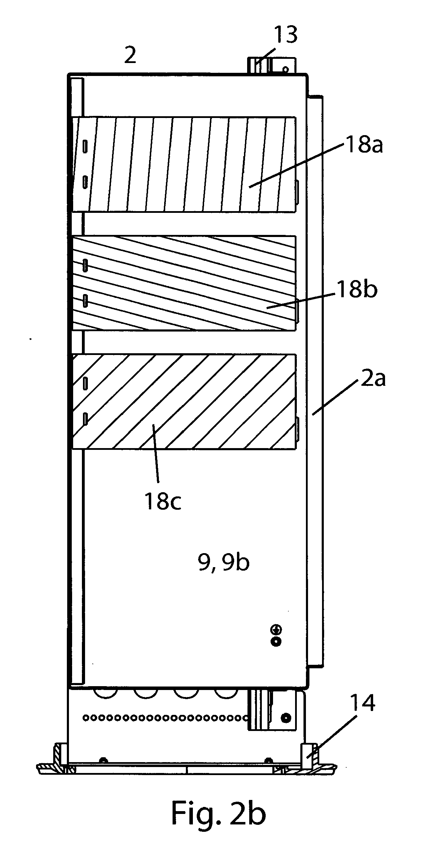

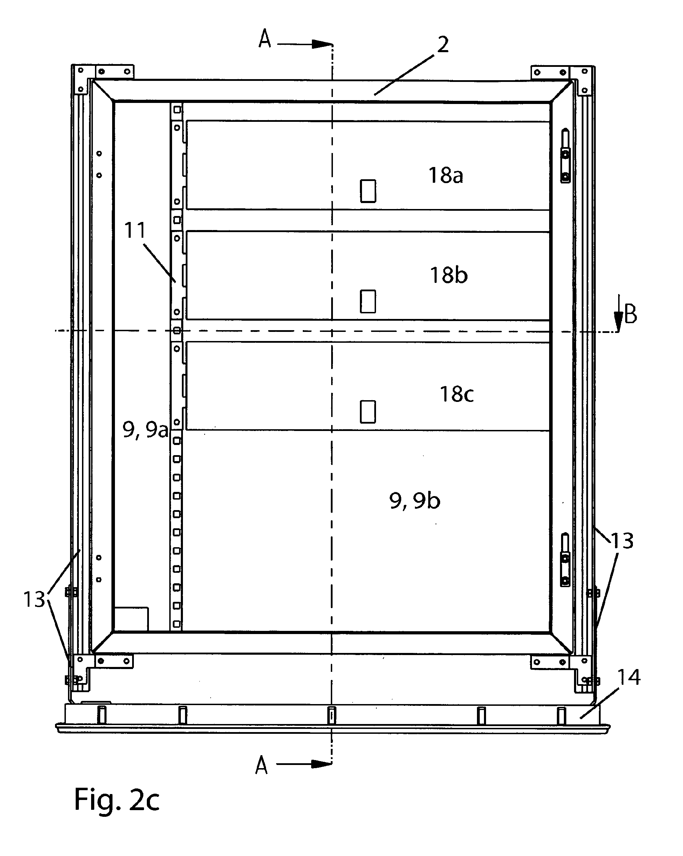

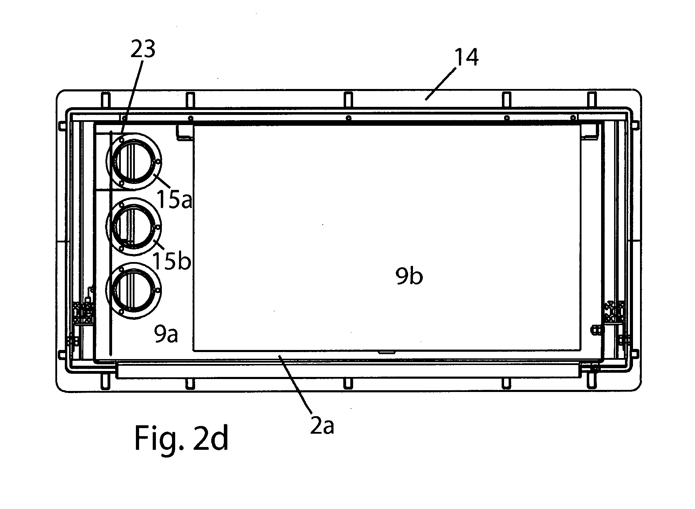

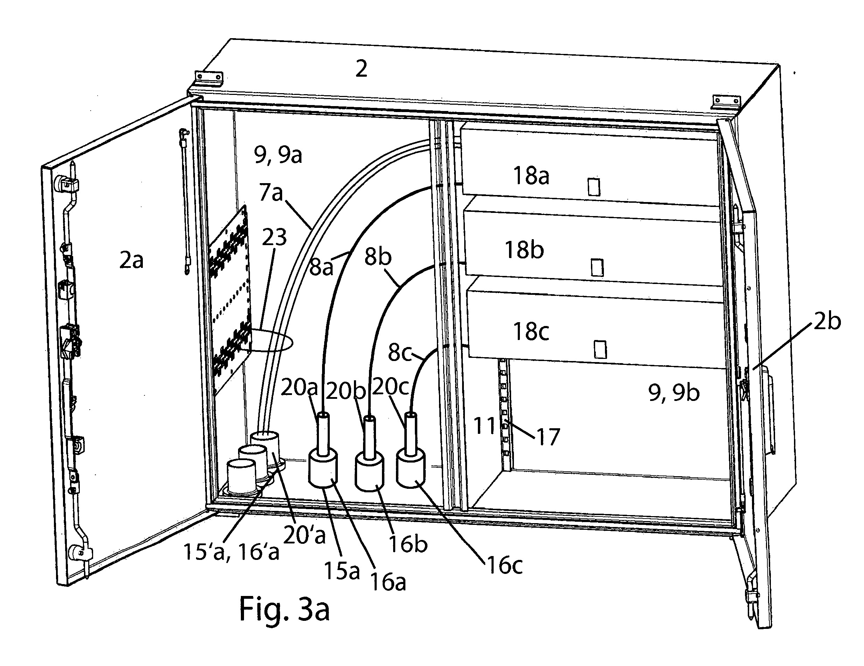

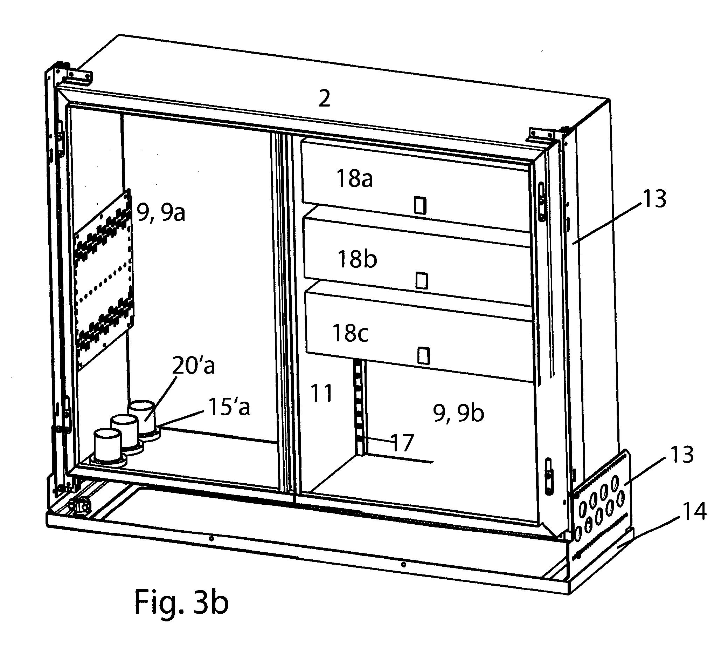

Je nach benötigtem Platzbedarf an Innenraum 9 des Innengehäuses 2 stehen unterschiedliche Größen solcher Verteilerschränke 1 zur Verfügung, wobei in den Figuren 2 eine eintürige und in Figur 3 eine breitere, zweitürige Version dargestellt ist:
Bei der zweitürigen Variante in Figur 3 deckt jeder der einzelnen verschließbaren Türen des Inngehäuses 2 jeweils einen der Teilräume dicht ab.

Beiden ist gemeinsam - wie am besten in Figur 3a zu erkennen - dass der Innenraum 9 des Innengehäuses 2 durch eine Trennwand 11 - die in den Figuren 2 noch nicht eingebaut ist - in zwei bei Frontansicht nebeneinander liegende Teilräume, nämlich den Einführraum 9a und den Verbindungsraum 9b, unterteilt ist.

Im Einführraum 9a münden die Glasfaserstränge, also Hauptstränge 7a.. ebenso wie Mirkostränge 8a, b.., die vom Erdreich aus durch die untere Öffnung in den Sockel 5, von dort weiter durch das Sockeloberteil 4 und die Bodenplatte 14 sowie den Boden des Innengehäuses 2 im Einführraum 9a in diesen hineingeführt sind.

In der Durchführung durch die Durchführöffnungen 15a.., b, 15'a.. durch den Boden des Innengehäuses 2 ist mittels Abdichtelementen 16a.., 16'a.. eine Abdichtung zwischen dem Bodenblech des Innengehäuses 2 und den Kunststoffrohren 20a, b, 20'a, gegeben, welches den jeweiligen Glasfaserstrang umgibt.

An der Außenwand des Einführraumes 9a ist auf der Innenseite, etwa auf halber Hälfte, eine Strangführung 23 zum Fixieren der Stränge angeordnet.

Dabei enden insbesondere die Kunststoffrohre 20a, b... der Mikrostränge 8a, b knapp oberhalb der Abdichtelemente 16a, b, um von diesem gut zugänglichen freien Ende der Kunststoffrohre 20a, b aus die Mirkostränge 8a, b in das Kunststoffrohren 20a, b einschieben zu können, vorzugsweise mittels Druckluft.

Im anderen, hier rechten, Teilraum, dem Verbindungsraum 9b, erstreckt sich in vertikaler Richtung ein Aufnahmegestell 17, in das horizontal von vorne Kassetten 18a, b einschiebbar und arretierbar sind, in welchen sich die jeweiligen Verbindungsabschnitte zwischen dem Ende eines Mikrostranges, z. B. 8a, und den entsprechenden Strängen eines Hauptstranges 7a befinden und dort nach dem Verbinden abgelegt wurden, vorzugsweise wiederum in einzelnen, nicht dargestellten, Unterkassetten in jeder Kassette, die neben der Verbindungsstelle in der Regel auch eine zusätzliche Schleife des Glasfaserstranges als Längenpuffer enthalten.

Vom Einführraum 9a in den Verbindungsraum 9b - die beide gleiche Dichtigkeits- Sicherheitsklasse aufweisen sollten - und werden die Glasfaserstränge durch entsprechend dimensionierte Öffnungen der Trennwand 11 geführt.

Bei dem zweiflügligen, breiten Schrank und damit Innengehäuse 2 gemäß Figur 3 sind Einführungen 9a und Verbindungsraum 9b etwa gleich breit, während bei der schmalen, eintürigen Variante gemäß Figur 2 der Einführraum 9a wesentlich schmaler ausfällt als der Verbindungsraum 9b, der wegen der genormten Breite der Kassetten 18a, b.. die gleiche Breite besitzt wie bei dem breiten Schrank der Figur 3.

Ausschlaggebend für die Breite des Einführraumes 9a ist primär die Anzahl der hineinzuführenden Glasfaserstränge 7a..., 8a...

Erfindungswesentlich ist unter anderem, dass sowohl das Außengehäuse 3 - wie in den Figuren 1 und 4a ersichtlich - über eine mittels eines Schlosses 21 verschließbare Tür, die in diesem Fall die gesamte Frontfläche abdeckt, verfügt, als auch darüber hinaus auch das im Außengehäuse 3 untergebrachte Innengehäuse 2 selbst wiederum eine oder zwei Türen 2a, b, die zusätzlich, wiederum mittels je eines Schlosses 22, verschließbar ist, so dass die Einbruchszeit bis in den Innenraum 9 sehr lang ist.

Des Weiteren sind die Glasfaserstränge, also Hauptstrang 7a.. als auch Mikrostränge 8a, b.., zusammengefasst von einem Schutzrohr 12 umhüllt, welches sich vom Eingang der Kabel von der Erde in das Sockelunterteil 5 durch dieses hindurch und das Sockeloberteil 4 hindurch bis zur Bodenplatte 14 oder gar dem Boden des Innengehäuses 2 erstreckt.

Das Schutzrohr 12 ist zwar sehr stabil gegen Schläge in Querrichtung zu seiner Verlaufsrichtung, jedoch dennoch ausreichend flexibel und biegsam, so dass es beim Abbrechen der Sollbruchelemente 6 und Umfallen des oberirdischen Teiles des Verteilerschrankes 1 neben dem Sockelunterteil 5 sich so biegt, dass zum einen ein Knicken der darin verlaufenden Glasfaserstränge vermieden wird und zum anderen ein Abreißen des Schutzrohres 12 und damit auch der darin verlaufenden Glasfaserstränge vom umgefallenen Teil vermieden wird.

Letzteres wird erreicht, indem das Schutzrohr an den bei einem Abreißen der Sollbruchelemente zumindest oberhalb der Sollbruchelemente angeordneten Komponenten befestigt wird, also der obere Bereich des Schutzrohres am Sockeloberteil 4, der Bodenplatte 14 und/oder dem Boden des Innengehäuses 12 befestigt wird.

Durch das Sockelunterteil 5 ist das Schutzrohr 12 ohne Befestigung hindurchgeführt, und wird nur in speziellen Fällen mit seinem endseitigen Ende im Erdboden und/oder am unteren Bereich des Sockelunterteiles 5 verankert.

Vorzugsweise wird vor allem der Bereich des Schutzrohres oberhalb der Sollbruchelemente 6 des Schutzrohres 12 an mehreren Komponenten befestigt, beispielsweise am Boden des Innengehäuses 2 und zusätzlich am Sockeloberteil 4.

Zusätzlich zur Biegsamkeit des Schutzrohres müssen die darin geführten und in den Kassetten 18a, b endenden Glasfaserstränge auch eine ausreichende Länge besitzen, um die beim umgefallenen Verteilerschrank gemäß Figur 4 vergrößerte Länge der Glasfaserstränge vom Einlauf in das Sockelunterteil bis zur jeweiligen Kassette aufgrund der Distanz zwischen Sockeloberteil und Sockelunterteil kompensieren zu können.

### BEZUGSZEICHENLISTE

- 1: Verteilerschrank
- 2: Innengehäuse
- 2a, b: Tür
- 3: Außengehäuse
- 4: Sockeloberteil
- 5: Sockelunterteil
- 6: Sollbuchelement
- 7 a, b: Hauptstrang
- 8 a, b: Mikrostrang
- 9: Innenraum
- 9 a: Einführraum
- 9 b: Verbindungsraum
- 10: Erdgleiche
- 11: Trennwand
- 12: Schutzrohr
- 13: Traggestell
- 14: Bodenplatte
- 14 a: Öffnung
- 15'a, 15 a: Strangzufuhröffnung
- 16'a,: 16a..Abdichtelement
- 17: Aufnahmegestell
- 18 a, b: Kassetten
- 19 a, b: Zufuhröffnung
- 20'a..: Kunststoffrohr
- 20 a, b: Kunststoffrohr
- 21: Schloss
- 22: Schloss
- 23: Strangbefestigung

## Patentansprüche

1. Glasfaserverteilerschrank (1) mit
- einem Außengehäuse (3),
- einem darin untergebrachten Innengehäuse (2), welches ein bis auf die Strangzuführungen geschlossenes Gehäuse ist,
- einem darunter angeordneten Sockeloberteil (4),
- einem im Erdboden unterzubringenden Sockelunterteil (5),
- Sollbruchelementen (6) zwischen dem Sockeloberteil (4) und dem Sockelunterteil (5),
- Strangzuführungen für den wenigstens einen Hauptstrang (7a) und Mikrostränge (8a, b..), die zu einzelnen Nutzern führen, von unten durch Sockelunterteil (5) und Sockeloberteil (4) in das Innengehäuse (2),
**dadurch gekennzeichnet, dass**
- der Innenraum (9) des Innengehäuses (2) einen Einführraum (9a) zum Einführen der Glasfaserstränge von unten umfasst sowie einen davon über eine Trennwand (11) getrennten Verbindungsraum (9b) für die Verbindungsstellen zwischen Hauptstrang (7a) und Mikrosträngen (8a, b..), und
- sich durch das Sockelunterteil (5) und das Sockeloberteil (4) und im unteren Bereich des Innengehäuses (2) wenigstens ein flexibles Schutzrohr (12) für die Glasfaserstränge (7a.., 8a..) erstreckt, welches durch das Sockelunterteil (5) lose hindurchgeführt und an dem Innengehäuse (2) und/oder dem Sockeloberteil (4) befestigt ist, so dass bei einem Durchtrennen der Sollbruchelemente (6) und Umkippen des Verteilerkastens ein Nachrutschen des Schutzrohres (12) relativ zum Sockelunterteil (5) erfolgen kann.

2. Glasfaserverteilerschrank nach Anspruch 1,
**dadurch gekennzeichnet, dass**
das Innengehäuse (2) aus Metall besteht und insbesondere ein Blechgehäuse ist.

3. Glasfaserverteilerschrank nach einem der vorhergehenden Ansprüche,
**dadurch gekennzeichnet, dass**
das Innengehäuse (2) verschließbar ist, insbesondere jede Tür des Innengehäuses separat verschließbar ist.

4. Glasfaserverteilerschrank nach einem der vorhergehenden Ansprüche,
**dadurch gekennzeichnet, dass**
der Verteilerschrank (1) ein Traggestell (13) zwischen Innengehäuse (2) und Außengehäuse (3) umfasst, welches
- auf dem Sockeloberteil (4) befestigt, insbesondere verschraubt ist, und/oder
- das Innengehäuse (2) im Inneren des Traggestelles (13) befestigt, insbesondere verschraubt und/oder aufgehängt, ist.

5. Glasfaserverteilerschrank nach einem der vorhergehenden Ansprüche,
**dadurch gekennzeichnet, dass**
das Außengehäuse (3), insbesondere als aus Einzelteilen zusammengesetztes Gehäuse, über nur von der Innenseite des Außengehäuses (3) her zugängliche Verschraubungen am Traggestell (3) verschraubt ist.

6. Glasfaserverteilerschrank nach einem der vorhergehenden Ansprüche,
**dadurch gekennzeichnet, dass**
das Außengehäuse (3), das Sockeloberteil (4) und/oder das Sockelunterteil (5) aus Kunststoff bestehen, insbesondere aus nicht brennbarem, selbstlöschendem Kunststoff, insbesondere aus Polycarbonat, insbesondere mit einer Glasfaser-Beimengung von z. B. 3 Gewichts-% bis 7-Gewichts-%.

7. Glasfaserverteilerschrank nach einem der vorhergehenden Ansprüche,
**dadurch gekennzeichnet, dass**
eine Bodenplatte (14) mit einer großflächigen Öffnung (14a) im Kontaktbereich zwischen Traggestell (13) und Sockeloberteil (4) angeordnet, insbesondere mit beiden verschraubt, ist.

8. Glasfaserverteilerschrank nach einem der vorhergehenden Ansprüche,
**dadurch gekennzeichnet, dass**
bei Betrachtung des Verteilerschrankes (1) von vorne, von den Türen her, der Einführungsraum (9a) und der Verbindungsraum (9b) nebeneinander liegen und insbesondere jeder von einer separaten Tür des Innengehäuses verschlossen ist.

9. Glasfaserverteilerschrank nach einem der vorhergehenden Ansprüche,
**dadurch gekennzeichnet, dass**
im Verbindungsraum (9b) ein Aufnahmegestell (17), insbesondere ein sogenanntes ETS-Gestell, zum horizontalen Einschieben von Spleiß- und Splitter-Kassetten (18a..) aufweist.

10. Glasfaserverteilerschrank nach Anspruch 9,
**dadurch gekennzeichnet, dass**
in der Trennwand (11) auf Höhe jeder Einschubposition der Kassetten (18) Zufuhröffnungen angeordnet sind.

11. Glasfaserverteilerschrank nach einem der vorhergehenden Ansprüche,
**dadurch gekennzeichnet, dass**
wenigstens die Mikrostränge (8a, b), insbesondere auch die Hauptstränge (7a, b), in Kunststoffrohren (20) geführt sind, die sich innerhalb des Schutzrohres (12a) befinden und mit diesem nicht verbunden sind.

12. Glasfaserverteilerschrank nach einem der vorhergehenden Ansprüche,
**dadurch gekennzeichnet, dass**
in einem Verteilerschrank nur ein einziges Schutzrohr (12a) angeordnet ist, in dem sämtliche Glasfaserstränge, also alle Hauptstränge (7a, b) und alle Mikrostränge (8a, b), zusammengefasst und geführt sind.

13. Glasfaserverteilerschrank nach einem der vorhergehenden Ansprüche,
**dadurch gekennzeichnet, dass**
Abdichtelemente (16) den Außenumfang der Kunststoffrohre (20) gegenüber dem Innenumfang der Strangzufuhröffnungen (15a) im Boden des Innengehäuses (2) abdichten und das Schutzrohr (12) am Boden des Innengehäuses (2) endet und dort an diesem befestigt ist

14. Glasfaserverteilerschrank nach einem der vorhergehenden Ansprüche,
**dadurch gekennzeichnet, dass**
die Glasfaserstränge (7a, b, 8a, b) an dem Austritt aus ihrer Hülle, insbesondere dem Kunststoffrohr (20), gegenüber diesem abgedichtet sind und so die Einzelstränge der Glasfasern untereinander bzw. die mehreren zu einem Hauptstrang zusammengefassten Einzelstränge und deren Kunststoffrohre (20) gegeneinander.

## Claims

1. A glass fiber distribution cabinet (1), comprising
- an exterior housing (3);
- an interior housing (2) included in the exterior housing, wherein the interior housing is a closed housing besides strand inlets,
- an upper base element (4) arranged thereunder,
- a lower base element (5) configured to be arranged in the ground
- rated fracture elements (6) arranged between the upper base element (4) and the lower base element (5)
- strand inlets for at least one main strand (7a) and micro strands (8a, b...) which run to the individual users from below through the lower base element (5) and the upper base element (4) into the interior housing (2)
**characterized in that**,
- the interior cavity (9) of the interior housing (2) includes an insertion cavity (9a) for inserting glass fiber strands from below and a connection cavity (9b) separated therefrom through a divider wall (11) for the connecting points between the main strand (7a) and micro strands (8a, b...), and
- at least one flexible protective tube (12) for the glass fiber strands (7a, ... 8a ...) extending through the lower base element (5) and the upper base element (4) in the lower portion of the interior housing (2), wherein the protective tube is loosely run through the lower base element (5) and wherein the protective tube is attached at the interior housing (2) and/or the upper base element (4) so that a sliding of the protective tube (12) relative to the lower base element (5) can be provided when the rated fracture elements (6) are cut and the distribution cabinet falls over.

2. The glass fiber distribution cabinet according to claim 1,
**characterized in that**
the interior housing (2) is made from metal, and the interior housing is in particular a sheet metal housing.

3. A glass fiber distribution cabinet according to one of the preceding claims,
**characterized in that**
the interior housing (2) is lockable, in particular each housing is separately lockable.

4. The glass fiber distribution cabinet according to one of the preceding claims,
**characterized in that**
the distribution cabinet (1) includes a support frame (13) between the interior housing (2) and the outer housing (3), wherein the support frame (13)
- is attached at the upper base element (4), in particular bolted down, and/or
- the interior housing (2) is attached in the interior of the support frame (13), in particular bolted down, and/or suspended.

5. The glass fiber distribution cabinet according to one of the preceding claims,
**characterized in that**
the exterior housing (3) is configured in particular as a housing that is assembled from individual elements and bolted to the support frame (13) through threaded connections that are only accessible from an inside of the exterior housing (3).

6. The glass fiber distribution cabinet according to one of the preceding claims,
**characterized in that**
the exterior housing (3), the upper base element (4) and/or the lower base element (5) are made from plastic material, in particular from non-flammable self-extinguishing plastic material, in particular polycarbonate, in particular with a glass fiber content of approximately 3% by weight to 7% by weight.

7. The glass fiber distribution cabinet according to one of the preceding claims,
**characterized in that**
a base plate (14) with a large opening (14a) is arranged in the contact area between the support frame (13) and the upper base element (4), in particular bolted together with both of them.

8. The glass fiber distribution cabinet according to one of the preceding claims,
**characterized in that**
viewing the distribution cabinet (1) from a front side from the doors, the insertion cavity (9a) and the connection cavity (9b) are arranged adjacent to one another, and in particular each of them is closed by a separate door of the interior housing.

9. The glass fiber distribution cabinet according to one of the preceding claims,
**characterized in that**
a receiving frame (17) is arranged in the connection cavity (9b), wherein the receiving frame is in particular a so-called ETS-frame for horizontal insertion of splice and splitter cassettes (18a..).

10. The glass fiber distribution cabinet according to claim 9,
**characterized in that**
feed openings are arranged in the divider wall (11) at an elevation of each insertion position of the cassettes (18).

11. The glass fiber distribution cabinet according to one of the preceding claims,
**characterized in that**
at least the micro strands (8a, b ...), in particular also the main strands (7a, b ...) are supported in plastic tubes (20) which are arranged within the protective tube (12a) but not connected therewith.

12. The glass fiber distribution cabinet according to one of the preceding claims,
**characterized in that**
only a single protective tube (12a) is arranged in the distribution cabinet wherein all glass fiber strands, thus all main strands (7a, b ...) and all micro strands (8a, b ...) are combined and supported in the single protective tube.

13. The glass fiber distribution cabinet according to one of the preceding claims,
**characterized in that**
sealing elements (16) seal an outer circumference of the plastic tubes (20) relative to an inner circumference of the strand feed openings (15a) in the base of the interior housing (2) and the protective tube (12) terminates at a base of the interior housing (2) and is attached at the base of the interior housing (2).

14. The glass fiber distribution cabinet according to one of the preceding claims,
**characterized in that**
the glass fiber strands (7a, b..., 8a, b...) are sealed at their outlets from their sleeves, in particular sealed relative to the plastic tube (20), so that the individual strands of the glass fibers are sealed amongst one another or the plural individual strands that are combined into a main strand and their plastic tubes (20) are sealed relative to each other.

## Revendications

1. Armoire de répartition de fibres de verre (1) comportant
- un boîtier externe (3)
- un boîtier interne logé (2) dans celui-ci qui est un boîtier fermé à l'exception d'amenées de brin,
- une partie supérieure de socle (4),
- une partie inférieure de socle (5) à loger dans le sol,
- des éléments de coupure (6) entre la partie supérieure de socle (4) et la partie inférieure de socle (5),
- des amenées de brin pour l'au moins un brin principal (7a) et des microbrins (8a, b..) qui conduisent aux utilisateurs individuels, du bas dans la partie inférieure de socle (5) et la partie supérieure de socle (4) dans le boîtier intérieur,
**caractérisé en ce que**
- l'espace intérieur (9) du boîtier interne (2) comprend un espace d'introduction (9a) pour introduire les brins de fibres de verre du bas et un espace de liaison (9b) séparé de celui-ci par une paroi de séparation (11) pour les sites de liaison entre un brin principal (7a) et des microbrins (8a, b..), et
- dans la partie inférieure de socle (5) et la partie supérieure de socle (4) et dans la zone inférieure du boîtier interne (2) s'étend au moins un tube de protection flexible (12) pour les brins de fibres de verre (7a.., 8a..), qui passe librement dans la partie inférieure de socle (5) et est fixé au boîtier interne (2) et/ou à la partie supérieure de socle (4), de sorte que lors d'une séparation des éléments de coupure (6) et un renversement de la boîte de répartition, un glissement du tube de protection (12) par rapport à la partie inférieure de socle (5) peut s'effectuer.

2. Armoire de répartition de fibres de verre selon la revendication 1,
**caractérisée en ce que**
le boîtier interne (2) est en métal, et en particulier est un boîtier en tôle.

3. Armoire de répartition de fibres de verre selon l'une des revendications précédentes,
**caractérisée en ce que**
le boîtier interne (2) peut être fermé, en particulier chaque porte du boîtier interne peut être fermée de façon séparée.

4. Armoire de répartition de fibres de verre selon l'une des revendications précédentes,
**caractérisée en ce que**
l'armoire de répartition (1) comprend une structure de support (13) entre le boîtier interne (2) et le boîtier externe (3), qui
- est fixée sur la partie supérieure de socle (4), en particulier est vissée, et/ou
- fixe le boîtier interne (2) à l'intérieur de la structure de support (13), en particulier est vissé et/ou accroché.

5. Armoire de répartition de fibres de verre selon l'une des revendications précédentes,
**caractérisée en ce que**
le boîtier externe (3), en particulier le boîtier composé d'éléments individuels, est vissé à la structure de support (3) par des vis accessibles uniquement par le côté interne du boîtier externe (3).

6. Armoire de répartition de fibres de verre selon l'une des revendications précédentes,
**caractérisée en ce que**
le boîtier externe (3), la partie supérieure de socle (4) et/ou la partie inférieure de socle (5) sont en matière plastique, en particulier en matière plastique non inflammable auto-extinguible, en particulier en polycarbonate, en particulier avec un mélange de fibres de verre, par exemple de 3 % en poids à 7 % en poids.

7. Armoire de répartition de fibres de verre selon l'une des revendications précédentes,
**caractérisée en ce que**
une plaque de fond (14) dotée d'une ouverture (14a) sur une grande surface est placée dans la zone de contact entre une structure de support (13) et une partie supérieure de socle (4), en particulier est visée avec les deux.

8. Armoire de répartition de fibres de verre selon l'une des revendications précédentes,
**caractérisée en ce que**
si l'on observe l'armoire de répartition (1) du devant, depuis les portes, l'espace d'introduction (9a) et l'espace de liaison (9b) sont côte à côte, et en particulier chacun est fermé par une porte séparée du boîtier interne.

9. Armoire de répartition de fibres de verre selon l'une des revendications précédentes,
**caractérisée en ce que**
dans l'espace de liaison (9b) se trouve un châssis de réception (17), en particulier un châssis dit « ETS », pour l'insertion horizontale de cassettes de raccordement et de séparation (18a).

10. Armoire de répartition de fibres de verre selon l'une des revendications précédentes,
**caractérisée en ce que**,
dans la paroi de séparation (11) à hauteur de chaque position d'insertion des cassettes (18), des ouvertures d'amenée sont disposées.

11. Armoire de répartition de fibres de verre selon l'une des revendications précédentes,
**caractérisée en ce que**
au moins les microbrins (8a, b), en particulier également les brins principaux (7a, b), sont conduits dans des tubes de matière plastique (20) qui se trouvent à l'intérieur du tube de protection (12a) et ne sont pas reliés à celui-ci.

12. Armoire de répartition de fibres de verre selon l'une des revendications précédentes,
**caractérisée en ce que**
dans une armoire de répartition est disposé seulement un tube de protection unique (12a) dans lequel tous les brins de fibres de verre, donc tous les brins principaux (7a, b) et tous les microbrins (8a, b), sont réunis et conduits.

13. Armoire de répartition de fibres de verre selon l'une des revendications précédentes,
**caractérisée en ce que**
des éléments d'étanchéité (16) assurent l'étanchéité du pourtour extérieur des tubes en matière plastique (20) par rapport au pourtour intérieur des ouvertures d'amenée de brins (15a) dans le fond du boîtier interne (2) et le tube de protection (12) se termine dans le fond du boîtier interne (2) et y est fixé.

14. Armoire de répartition de fibres de verre selon l'une des revendications précédentes,
**caractérisée en ce que**
les brins de fibres de verre (7a, b, 8a, b) sont étanchéifiés à la sortie de leur gainage, en particulier du tube en matière plastique (20), par rapport à celui-ci, et donc les brins individuels des fibres de verre entre eux ou les multiples brins individuels réunis en un brin principal et leurs tubes en matière plastique (20) les uns par rapport aux autres.
